# EUROPEAN PATENT SPECIFICATION

(11) **EP 0 358 815 B1**
(45) Date of publication and mention of the grant of the patent: **26.05.1993**
(21) Application number: 88201987.0
(22) Date of filing: 12.09.1988
(51) Int. Cl.: H04N 1/40

(54) **System and method for automatic segmentation**
System und Verfahren für automatische Segmentierung
Système et méthode pour segmentation automatique

(43) Date of publication of application: 21.03.1990
(73) Proprietor: Océ-Nederland B.V., 5914 CC Venlo (NL)
(72) Inventor: Westdijk, Jacob Albert, NL-5911 EW Venlo (NL)
(74) Representative: Hanneman, Henri W., Dr.

(56) References cited:
- EP-A- 0 100 811
- EP-A- 0 202 425
- FR-A- 2 508 747
- US-A- 4 741 046

## Description

The present invention relates to a system and method for automatically segmenting a scanned document in an electronic document processing device.

A document that is to be processed in an electronic document processing device such as an electronic copier, an optical character recognition system or a data compression system, may comprise different types of information which have to be processed in different ways in order to obtain a sufficient copy quality and a sufficient compression and/or to enable image manipulations. For example, a document may comprise continuous tone photographs, rastered or dithered images hereafter referred to as halftones, as well as black/white information such as text or graphics. When the data obtained by scanning such a document are subjected to image processing, image storage and printing in an electronic copier, the information representing text or graphics is usually thresholded to obtain a binary image, while periodic information (rasters) are grey-value thresholded and continuous tone information is dithered. Consequently, it is necessary to locate and identify the areas or segments of the document containing different types of information. This process is termed "segmentation".

An example of a conventional automatic segmentation system which is capable of separating text information from halftone image information is disclosed in EP-A2-0 202 425. In this system, the scanned image of the document is subdivided into a matrix of blocks or subimages having a size of 4 by 4 pixels. Then, each of these blocks is labeled either as TEXT or as IMAGE. Since the labeling of the comparatively small blocks is subject to statistical fluctuations, the matrix of labels thus obtained will frequently include short runs of text blocks in an area where image blocks are predominant, and vice versa. In a final step of the segmentation process, the label matrix is relaxed by eliminating such short runs of blocks. In other words, a context rule is applied which requires that the labels of isolated blocks or isolated short runs of blocks are switched-over to be equal to the label which is dominant in the environment.

In general, an automatic segmentation system has to fulfill two conflicting requirements. On the one hand, it should be fast enough so that the document can be processed at high speed. On the other hand, it should be sufficiently robust, so that it can also handle documents for which it is difficult to distinguish between the different types of information, because, for example, the characters of a text are printed in bright colours or on a dark background or because, for example photographs contain bright areas. In order to improve the robustness of a conventional segmentation system, it is necessary to check a larger number of criteria in the labeling step and/or in the relaxation step, so that the processing time is increased.

It is an object of the present invention to provide an automatic document segmentation system and method having improved robustness and speed.

This object is achieved by the system specified in claim 1 and the method indicated in claim 17.

According to the invention, the number of different labels which can be selected in the initial labeling step is larger than the number of different types of information which finally have to be distinguished. Consequently, it is not necessary in the initial labeling step to identify the type of information with certainty. For this reason, the initial labeling step can be accomplished within a comparatively short time, even when the size of the subimages is chosen comparatively large in order to reduce statistical fluctuations. The type of information represented by the initial labels is finally determined in the relaxation step on the basis of context rules. It turned out that context rules which are suitable to this aim do not require too much calculation time, so that a net time saving is obtained. Further, since the initial labels provide a differentiated classification, certain errors that have occured in the initial labeling step can be corrected in the relaxation step even when these errors apply to comparatively large runs of subimages. This contributes to an improved robustness of the system.

Useful details and further improvements of the system according to the invention are indicated in the dependent claims.

Preferred embodiments of the invention will be described hereinbelow in conjunction with the drawings, in which:
Fig. 1 is a block diagram illustrating the general constitution of an automatic segmentation system;
Fig. 2 is a graph illustrating a tree-classifier used in the initial labeling step;
Figs. 3(A) to 3(E) are diagrams of context rules used in the relaxation step;
Figs. 4(A) and 4(B) show an example of an initial label matrix and a relaxed label matrix obtained therefrom;
Fig. 5 is a block diagram of a possible hardware implementation of the system according to the invention; and
Figs. 6 and 7 are block diagrams of modified examples of the segmentation system.

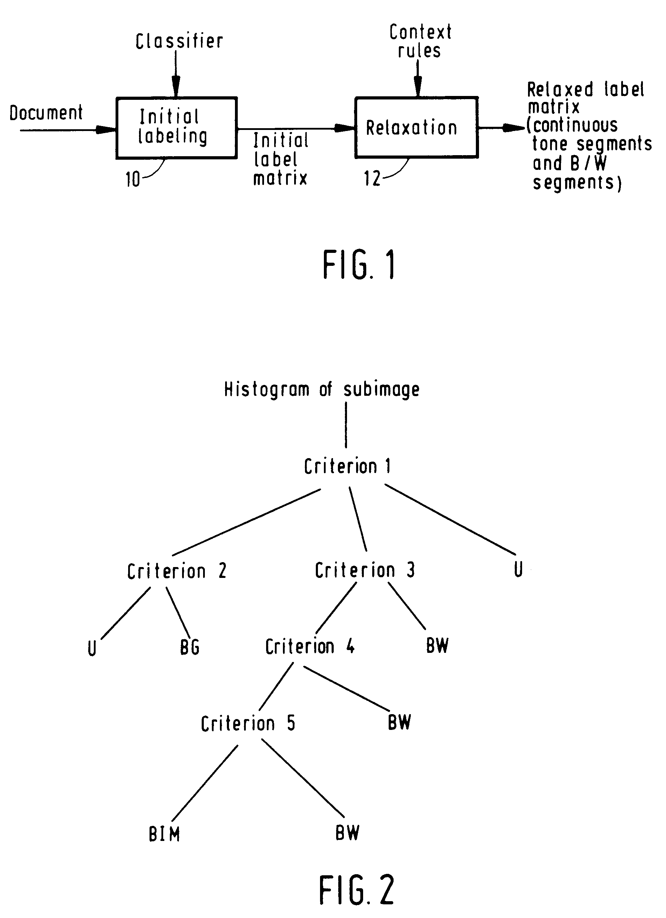

As is shown in Fig. 1, a document segmentation system comprises an initial labeling module 10 and a relaxation module 12. A signal representing the scanned image of the whole document is transmitted from a document scanner (not shown) to the initial labeling module 10. The scanned image is considered to consist of a matrix of subimages. In a representative example, an A4 document is scanned with a scan resolution of 500 dpi, and the size of the subimage is 64 x 64 pixels. The grey-level of each pixel is indicated by an 8-bit-word corresponding to one of 256 grey levels.

In the initial labeling module 10, each individual subimage is analysed by means of a classifier which comprises a number of routines for extracting characteristic features from the subimage. On the basis of the extracted features, a specific initial label is assigned to the subimage. As a result, an initial label matrix is obtained, which represents the whole document and the matrix elements of which are the labels of the individual subimages.

The initial label matrix is further processed in the relaxation module 12. A number of context rules is applied in order to change the initial labels dependent on the labels assigned to neighbouring subimages. The context rules are so designed that some of the initial labels are eliminated completely in the course of the relaxation process.
The result is a relaxed label matrix which, in this embodiment, consists on only two different labels which form segments corresponding to continuous tone areas (e.g. photographs) and black/white areas (e.g. text or graphics), respectively, of the scanned document.

The classifier used in the initial labeling module may be based on conventional methods of image analysis, such as histogram evaluation, spacial analysis, differential operators, spectral analysis, or a combination of these methods. The classifier may be a tree-classifier in which the check routines to be applied are respectively dependent on the result of the preceding check, or alternatively a one-shot classifier may be used. As a preferred embodiment, Fig. 2 illustrates a tree-classifier which evaluates a grey-level histogram of the subimage. Each branching point of the tree diagram shown in Fig. 2 corresponds to a specific criterion for which the histogram data are checked. For example, the following criteria may be considered.
- The position of the highest peak of the histogram on the abscissa, i.e. the grey-level which occurs most frequently. This criterion provides a rough indicator for the overall brightness of the subimage.
- The number of peaks of the histogram. Specifically, a histogram having two distinct peaks may be a hint to text or graphics.
- The height difference between two peaks. In most cases of text or graphic information, there will be a large height difference between the highest and the second highest peak.
- The grey-level difference between two peaks. In black/white images, this difference will be large.
- The height of the minimum level between two dominant peaks. In a continuous tone image, this level will be high.
- The height differences between the highest peak and the minimum levels on one or both sides thereof, as a kind of "signal to noise distance".
- The number of pixels below the minimum level of the valley between the two main peaks. This number will be high in halftone images.
- The widths of the highest peak or the two highest peaks. Narrow peaks may be an indication of text or graphics.

When the criteria used in the classifier have a wide range of possible results, the results are thresholded to obtain a practical number of branches. The structure of the tree, the criteria employed therein and the threshold values for the results may be optimized by matching them to statistical results obtained from a number of gauge documents. The broader variety of gauge documents, the larger will be the robustness but also the required complexity of the classifier.

In the example shown in Fig. 2, the tree-classifier provides as possible classification results four different labels, which are indicated as BW, BIM, BG and U. In this example, the features of the images indicated by these labels may be described as follows:
- BW:: Two dominating grey-levels with a high contrast; a candidate for text or graphics (BW stands for black/white),
- BIM:: An image which has also two dominant grey-levels, but is not a strong candidate for text or graphics in view of other criteria (BIM stands for "bimodal"),
- BG:: A typical background area; comparatively bright and with low contrast; may occur in text or graphic segments but as well in halftone segments,
- U:: An area with a diffuse grey-level distribution (U="undefined"); a candidate for continuous tone images.

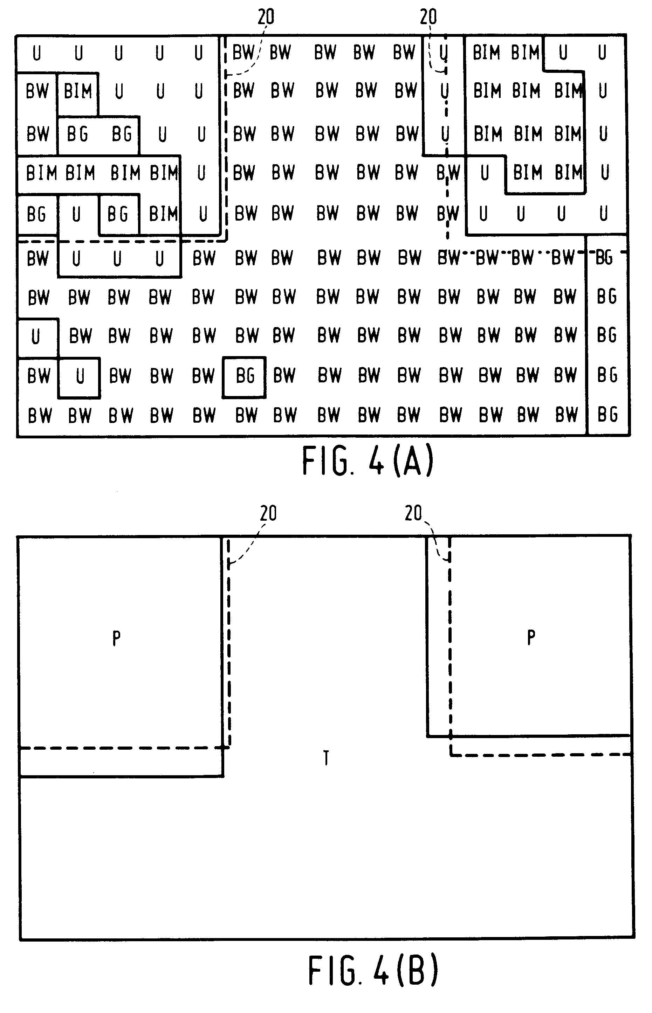

An example of an initial label matrix obtained with the above-described classifier is illustrated in Fig. 4 (A). It will be recognized that this intitial label matrix still includes a number of fluctuations which have to be eliminated in the relaxation step.

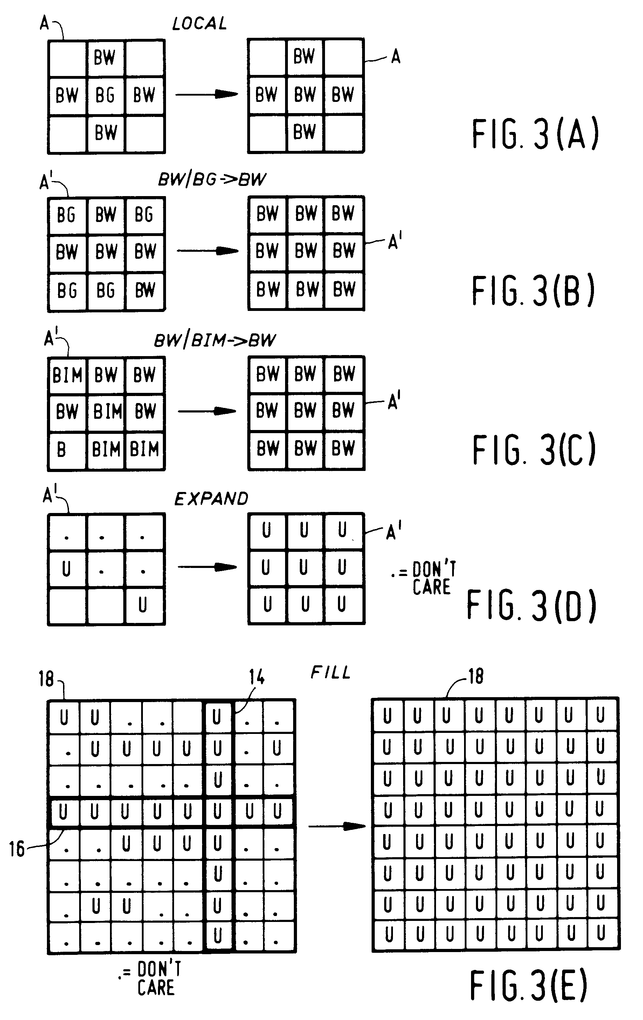

The context rules used in the relaxation process will be described below in conjunction with Fig. 3.

In order to compare the matrix elements to their respective neighbours, the matrix elements are combined to arrays A,A' of 3 x 3 elements. Four context rules illustrated in Figs. 3(A) to 3(D) are applied to the individual 3 x 3 arrays.

A so called "LOCAL" context rule illustrated in Fig. 3(A) has the purpose to eliminate isolated labels in a homogeneous environment. This rule may be formulated as follows:
If a label X is surrounded by upper, lower, right and left neighbours having the label Y, then change X to Y.

In this rule, X and Y stand for arbitrary ones of the initial labels BW, BIM, BG, U.

The context rules illustrated in Figs. 3(B) and 3(C) may be called "weak expansion" rules and have the following structure:
If at least one element in a 3 x 3 array A' has the label BW (weakly expanding label) and the array does not contain labels from a predetermined group, then expand the label BW over the whole array.

The expansion rule shown in Fig. 3(B) converts combinations of BW and BG to BW and may briefly be written as BW/BG --> BW. In this rule, the "predetermined group" of labels which must not be contained in the array consists of the labels BIM and U. If any of these labels is contained in the array, the array is left unchanged by this context rule.

In Fig. 3(C), the "predetermined group" of forbidden labels comprises the labels BG and U. Accordingly, this context rule converts only arrays which consist of combinations of BW and BIM and may be written as BW/BIM --> BW.

It is possible to establish other context rules with the same structure by defining other groups of labels which must not be contained in the array. For example, it is possible to convert the whole array to BW in one step, when the array consists of a combination of BW, BG and BIM.

Further, these context rules may be modified by requiring that the array must contain at least two, three or more elements having the label BW.

A context rule EXPAND illustrated in Fig. 3(D) prescribes that:
If the array A' includes at least one element with the label U (strongly expanding label), the label U is expanded over the whole array.

In this rule, there is no restriction as to the other labels appearing in the initial array.

Fig. 3(E) illustrates a context rule which is termed FILL and which is not constrained to the 3 x 3 arrays. This rule can be defined as follows.
1) Where the label U forms intersecting vertical and horizontal runs 14,16, fill the whole rectangle 18 spanned by these runs with the label U (the term "run" designates a non-interrupted sequence of labels U in a row or a column of the matrix);
2) Check all combinations of horizontal and vertical runs to maximize the area filled with U;
3) If the height of the maximized area is smaller than 4 elements or the width thereof is smaller than 4 elements, then change all labels of this area to BW.

As an extension to the context rule FILL the spanned rectangles are only filled with the label U if they contain a number of U-labels greater than a predefined ratio (Umin/U) and/or the shape of the rectangle is bound to certain conditions, for example greater than a pre-defind minimum or smaller than a predefined maximum.

The relaxation module 12 is programmed to apply the context rules illustrated in Fig. 3 in a sequence which is listed below.
1) LOCAL
2) BW/BG --> BW
3) LOCAL
4) BW/BIM --> BW
5) LOCAL
6) BW/BG --> BW
7) LOCAL
8) EXPAND
9) LOCAL
10) FILL

In each of these steps, the context rule is applied to the whole matrix before the next step is executed. In case of the context rule LOCAL, the whole matrix is scanned with a 3 x 3 window in steps of one element, so that each element is once considered as the central element of the 3 x 3 array A.

In the steps 2), 4) and 6), the same procedure may be applied. Alternatively, the matrix may be divided into a rigid grid of 3 x 3 arrays A'.

In the step 8), a rigid grid of 3 x 3 arrays A' is used. Alternatively, the floating array method may be adopted, but then it should be required that each array includes at least two labels U, since otherwise, the expanded area would become too large.

The step 1) starts with the initial label matrix generated in module 10. All other steps are executed on the modified matrix which is obtained as the result of the preceding step. It will be noted that the application rule LOCAL is executed several times, interleaving with the other context rules. The rule BW/BG --> BW is applied in step 2) and is applied once again in step 6).

At the end of step 7, the labels BG and BIM will be eliminated to a large extent, and the matrix will show areas which are homogeneously filled with the label BW, while other areas contain the label U in combination with other labels. In these areas, the label U will be expanded in steps 8) and 10), so that at the end of step 10) the whole matrix is composed of rectangular areas homogeneously filled with either BW or U. However, the rule FILL prescribes that areas filled with U are converted to BW, if they are too small.
Thus, the label matrix obtained at the end of step 10) consists only of the labels BW and U which form large rectangular segments representing black/white areas and continuous tone areas, respectively, of the scanned document. This matrix corresponds to the desired relaxed label matrix. In order to distinguish this matrix from the initial label matrix, the labels BW and U are renamed as relaxed labels T (for "TEXT") and P (for "PHOTO"), respectively.

Fig. 4(B) illustrates the relaxed label matrx obtained from the intitial label matrix shown in Fig. 4(A). These Figs. reflect experimental results which were obtained by applying the above-described segmentation process to a test document which included a text area with several text formats and two photographic areas. The actual borders of the photographic areas of the document are indicated by dashed lines 20.

It will be noted that the P-segments in Fig. 4(B) match with the actual borders of the photographic areas within the resolution of the matrix of subimages.

As is shown in Fig. 4(A), the photographic areas include comparatively large coherent areas filled with the labels BW, BIM, and BG, which could as well have been interpreted as text areas. In the relexation process, these ambiguities have succesfully been removed by means of the context rules.

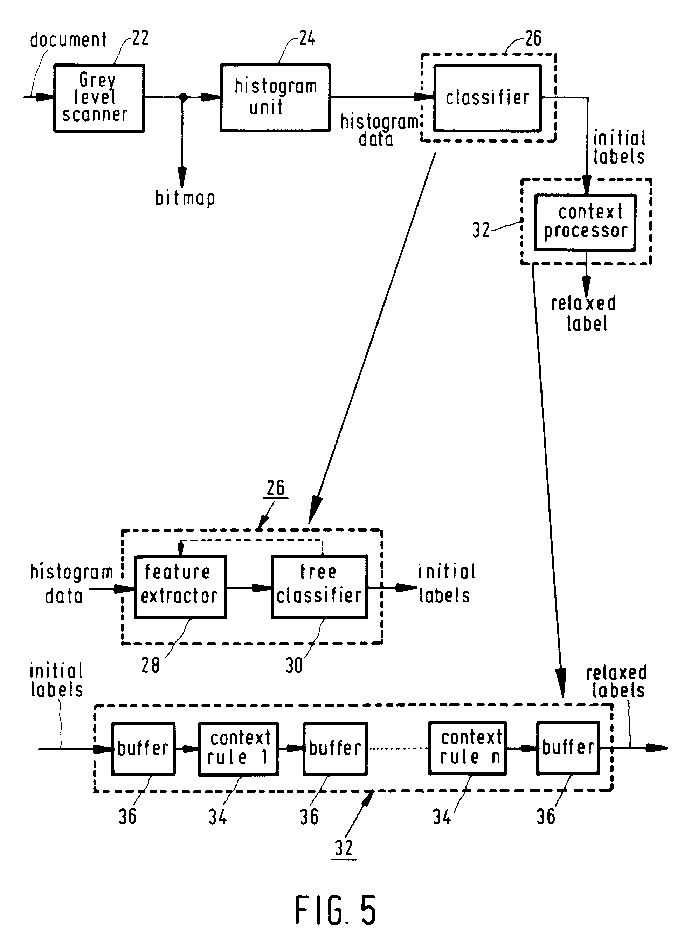

Fig. 5 illustrates a possible hardware implementation of the automatic segmentation system.

The document is scanned in a scanner 22, and the digital values representing the grey-levels of the individual pixels are stored in a bitmap. These values are further transmitted to a histogram unit 24 which establishes histograms for the individual subimages of the document. The histogram data are evaluated in a classifier 26 which corresponds to the initial labeling module 10 in Fig. 1. The classifier 26 comprises a feature extractor 28 for checking the features of the histogram and a tree-classifier 30 which selects the features to be checked and finally assigns one of the initial labels to the investigated subimage.

The initial labels are further processed in a context processor 32 which corresponds to the relaxation module 12 in Fig. 1. The context processor comprises processing modules 34 for sequentially applying the context rules (steps 1 to 10) and buffers 36 for storing the initial label matrix, the intermediate results and the relaxed label matrix.

In a modified hardware implementation there may be provided a plurality of histogram units 24 and classifiers 26 so that a plurality of subimages can be processed in parallel in the initial labeling phase.

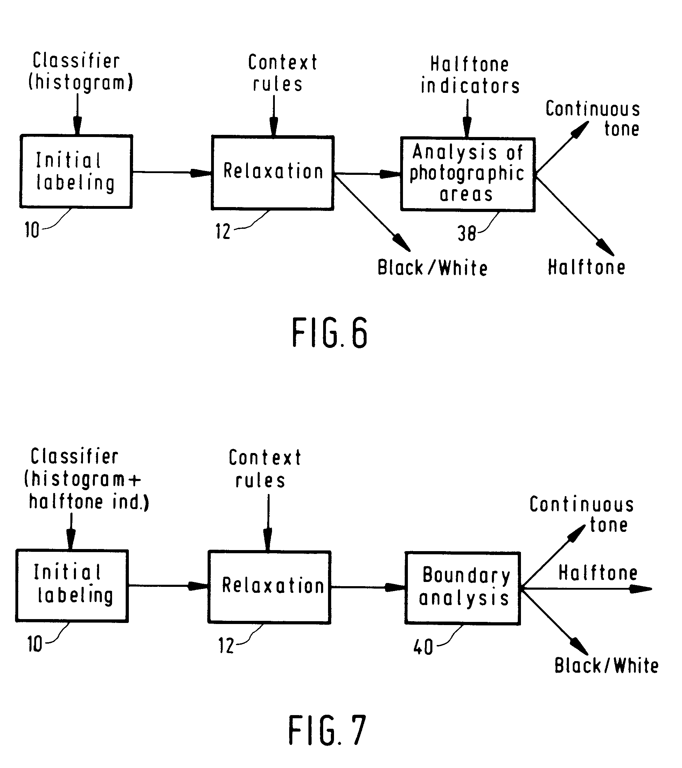

In the embodiment example illustrated in Figs. 1 to 4, the segmentation system distinguishes only between two different types of information, i.e. black/whit information (label T) and continuous tone information (label P). The photographic segments may contain continuous tone information as well as periodic information such as rasters or dithered images. The concept according to the invention is also applicable to segmentation systems which further distinguish between continuous tone information and periodic information. This can for example be achieved by modifiying the segmentation system as is shown in Fig. 6 or 7.

In both Figs. halftone indicators are used to detect halftone information. Halftone information can be detected using the following criteria for each subimage:
- The distance between the first non-DC-peak value in the spectrum and the origin of the spectrum.
- The ratio between the DC-peak value and the first non-DC-peak value in the spectrum.

In Fig. 6, the initial labeling process and the relaxation process are performed in the same way as in Fig. 1, and subsequently the photographic areas (label P) are further analysed to distinguish between continuous tone information and periodic information. This can be achieved by checking one of the raster indicators mentioned before, carried out by the periodicy module 38. The system illustrated in Fig. 6 has the advantage that the time consuming check for periodic information is confined to the segments that have been identified as photographic area.

Alternatively, the check for periodic information may be carried out in the initial labeling phase, as is illustrated in Fig. 7. In this case, the initial labels will include at least one label which indicates a strong candidate for raster images, and the context rules in the relaxation module will include rules for expanding this label, so that the relaxed label matrix includes three different labels corresponding to continuous tone information, periodic information and black/white information.

The context rules to find regions containing halftone information can be similar to the described context rules FILL and EXPAND (Fig. 3) intended for finding continuous tone areas. Instead of the target label U now the label indicating halftone information will be used.

In the example shown in Fig. 7, a boundary analysis module 40 is added for improving the congruence between the segments (P and T in Fig. 4B) and the actual borders 20 of the photographic areas of the document.

The boundary analysis may for example be achieved by vertically and horizontally shifting the grid of the subimages by a certain part of the subwindow size (e.g. 1/4, 1/2, 3/4) and repeating the initial labeling and relaxation procedures for the shifted grids. Then, a comparison of the different results provides more detailed information on the actual position of the boundaries of the photograhic area.

Optionally, the boundary analysis for vertical and horizontal boundaries may be limited to the portions of the document in which vertical and horizontal boundaries, respectively, of the photographic area must be expected.

In an alternative approach, the boundary analysis may be carried out by further analysing certain target areas which are centered on the coordinates of label transitions in the relaxed label matrix. For example, the target areas are subdivided into subwindows providing a higher resolution than is used during initial labeling, and then each subwindow can be classified as a boundary subwindow or a non-boundary subwindow.

The analysis of target areas may be limited to isolated locations on the transition lines in the relaxed label matrix. When the boundary is exactly located within these target areas, the exact position of the whole boundary may be found by extrapolation.

While specific embodiments of the invention have been described above, a person skilled in the art will be able to conceive various modifications which all fall within the scope of the inventive concept specified in the claims.

For example the context rules mentioned in relation to Fig. 3, can be performed with matrices bigger than the described size of 3 x 3 subimages.

## Claims

1. A system for automatically segmenting a scanned document in an electronic document processing device, in order to separate document areas (T,P) containing image information of different types, such as black/white pictures, continuous tone pictures and the like, comprising
- matrix generating means for subdividing the scanned image representing the whole document into a matrix of subimages,
- labeling means (10) for analysing the information contained in each subimage and assigning to the subimage an initial label (BW, BIM, BG, U) thereby to obtain an initial label matrix (Fig. 4(A)), and
- relaxation means (12) for relaxing the initial label matrix by changing the labels pursuant to context rules, to obtain a pattern of uniformly labeled segments representing the different document areas,
characterised in that said labeling means (10) are adapted to select the initial labels from a first set of labels (BW, BIM, BG, U) and the relaxation means are adapted to transform the initial labels into relaxed labels (T,P), the relaxed labels being selected from a second set of labels which is smaller in number than said first set.

2. A system as claimed in claim 1, wherein the context rules implemented in said relaxation means (12) comprise rules for expanding some of the initial labels (BW, U) and eliminating others of the initial labels (BIM, BG), the expanded labels being finally identified with the relaxed labels (T,P).

3. A system as claimed in claim 2, wherein the context rules comprise at least one rule which has one of the following structures:
a) "if in a predetermined array (A') of matrix elements in said initial label matrix at least n elements have the label BW and this array does not contain labels from the group G, then change all labels in this array to BW";
wherein n is a predetermined number, BW is a predetermined initial label and G is a predetermined subset of the set of initial labels,
b) "if in a predetermined array (A') of matrix elements in said initial label matrix at least m elements have the label U, then change all labels in this array to U";
wherein m is a predetermined number and U is a predetermined initial label,
c)
"c1) where the label U forms intersecting vertical and horizontal runs (14,16), fill the whole rectangle (18) spanned by these runs with the label U;
c2) check all combinations of horizontal and vertical runs to maximize the area to be filled with the label U;
c3) if the height of the maximized area is smaller than hₘᵢₙ elements or the width is smaller than wₘᵢₙ elements, then change all labels within this area to BW";
wherein U and BW are predetermined initial labels and hₘᵢₙ and wₘᵢₙ are predetermined numbers.

4. A system as claimed in claim 3, characterised in that the context rules further comprise a rule of the following structure:
c4) "if the rectangle, mentioned in c1, contains a number of U labels greater than a predetermined number Umin fill the whole rectangle with label U",
c5) "if the shape of the rectangle, mentioned in c1, fulfills the conditions: width/height >min. and width/height <max., fill the whole rectangle with label U",
wherein min. and max. are pretermined numbers.

5. A system as claimed in claim 3 or 4, wherein the predetermined arrays (A') to which the context rules (a) and (b) are applied have a size of 3 x 3 subimages.

6. A system as claimed in claim 3, 4 or 5, wherein said relaxation means comprise a plurality of stages (34) for step-wise modifiying the initial label matrix by applying each context rule at least one time pursuant to a predetermined sequence.

7. A system as claimed in claim 6, wherein the context rule with the structure (a) is applied prior to the context rule with the structure (b) and the context rule with the structure (b) is applied prior to the context rule with the structure (c).

8. A system as claimed in claim 6 or 7, wherein the context rules comprise a local rule prescribing that
"if a given matrix element is surrounded by upper, lower, right and left immediate neighbours which all have the same label X, the label of the given matrix element is also changed to X",
wherein the local rule is applied immediately before each of the rules with the structure (a), (b), or (c).

9. A system as claimed in any of the preceding claims, wherein the size of each subimage is at least 16 x 16 pixels, preferably 64 x 64 pixels, and the scan resolution is larger than 100 dpi.

10. A system as claimed in claim 9, wherein said labeling means (10) comprise a histogram unit (24) for generating grey-level histograms of each subimage.

11. A system as claimed in any of the preceding claims, wherein the labeling means (10) comprise a tree-classifier for determining the label to be assigned to a given subimage by checking features of the input data pursuant to a tree structure.

12. A system as claimed in any of the preceding claims, wherein said labeling means comprise means (38) for detecting rasters or dithered information.

13. A system as claimed in any of the claims 1-11, comprising context rules for finding halftone areas.

14. A system as claimed in any of the claims 1 to 11, comprising means (38) for detecting rasters or dithered information only in photographic areas that have been segmented by said relaxation means (12).

15. A system as claimed in any of the preceding claims, comprising a plurality of labeling means (10) for parallel processing of the data from a plurality of subimages.

16. A system as claimed in any of the preceding claims, comprising boundary analysis means (40) responsive to the output of said relaxation means (12) for locating the boundaries of the segmented areas with a higher resolution.

17. A method for automatically segmenting a scanned document in an electronic document processing device, in order to separate document areas (T,P) containing different types of image information, such as black/white pictures, continuous tone pictures and the like wherein
- the scanned image representing the whole document is subdivided into a matrix of subimages,
- the information contained in each subimage is analysed to assign to the subimage an initial label (BW, BIM, BG, U), thereby to obtain an initial label matrix, and
- the initial label matrix is relaxed by changing the labels of individual matrix elements pursuant to context rules, to obtain a pattern of uniformly labeled segments representing said different document areas,
characterised in that the initial labels are selected from a first set of labels (BW, BIM, BG, U), and in that, in the relaxation step, the initial labels are transformed into relaxed labels (T,P) which are selected from a second set of labels which is smaller in number than said first set.

## Patentansprüche

1. System zum automatischen Segmentieren eines gescannten Dokuments in einem elektronischen Dokumentenverarbeitungsgerät, um Dokumentenhereiche (T, P) zu trennen, die Bildinformation unterschiedlicher Arten enthalten, wie etwa Schwarz/Weiß-Bilder, Bilder mit kontinuierlicher Tönung und dergleichen, mit
- Matrixerzeugungsmitteln zum Aufteilen des das gesamte Dokument repräsentierenden gescannten Bildes in eine Matrix aus Teilbildern,
- Kennzeichnungsmitteln (10) zum Analysieren der in jedem Teilbild enthaltenen Information und zum Zuordnen einer anfänglichen Kennung (BW, BIM, BG, U) zu dem Teilbild, um so eine anfängliche Kennungsmatrix (Fig.4(A)) zu erhalten, und
- Glättungsmitteln (12) zum Glätten der anfänglichen Kennungsmatrix durch Ändern der Kennungen gemäß Kontextregeln, um ein Muster aus gleichförmig gekennzeichneten Segmenten zu erhalten, die die verschiedenen Dokumentenbereiche repräsentieren,
dadurch **gekennzeichnet,** daß die Kennzeichnungsmittel (10) dazu eingerichtet sind, die anfänglichen Kennungen aus einer ersten Menge von Kennungen (BW, BIM, BG, U) auszuwählen, und die Glättungsmittel dazu eingerichtet sind, die anfänglichen Kennungen in geglättete Kennungen (T, P) umzuwandeln, welche geglätteten Kennungen aus einer zweiten Menge von Kennungen ausgewählt sind, die zahlenmäßig kleiner ist als die erste Menge.

2. System nach Anspruch 1, bei dem die in den Glättungsmitteln (12) implementierten Kontextregeln Regeln zum Expandieren einiger der anfänglichen Kennungen (BW, U) und zum Eliminieren anderer der anfänglichen Kennungen (BIM, BG) enthalten und die expandierten Kennungen letztlich mit den geglätteten Kennungen (T, P) identifiziert werden.

3. System nach Anspruch 2, bei dem Kontextregeln wenigstens eine Regel enthalten, die eine der folgenden Strukturen hat:
a) "wenn in einem bestimmten Feld (A') von Matrixelementen in der anfänglichen Kennungsmatrix wenigstens n Elemente die Kennung BW haben und dieses Feld keine Kennungen aus der Gruppe G enthält, so ändere alle Nennungen in diesem Feld zu BW";
wobei n eine vorgegebene Anzahl, BW eine vorgegebene anfängliche Kennung und G eine vorgegebene Teilmenge der Menge der anfänglichen Kennungen ist,
b) "wenn in einem vorgegebenen Feld (A') von Matrixelementen in der anfänglichen Kennungsmatrix wenigstens m Elemente die Kennung U haben, so ändere alle Kennungen in diesem Feld zu U";
wobei m eine vorgegebene Anzahl und U eine vorgegebene anfängliche Kennung ist,
c)
"c1) wo die Kennung U einander schneidende vertikale und horizontale Ketten (14,16) bildet, fülle das gesamte von diesen Ketten aufgespannte Rechteck (18) mit der Kennung U;
c2) überprüfe alle Kombinationen aus horizontalen und vertikalen Ketten, um die mit der Kennung U zu füllende Fläche zu maximieren;
c3) wenn die Höhe der maximierten Fläche kleiner ist als hₘᵢₙ Elemente oder die Breite Kleiner ist als wₘᵢₙ Elemente, so ändere alle Kennungen innerhalb dieser Fläche zu BW";
wobei U und BW vorgegebene anfängliche Kennungen und hₘᵢₙ und wₘᵢₙ vorgegebene Anzahlen sind.

4. System nach Anspruch 3, dadurch gekennzeichnet, daß die Kontextregeln weiterhin eine Regel mit der folgenden Struktur enthalten:
c4) "wenn das in c1 erwähnte Rechteck eine Anzahl von Kennungen U enthält, die größer als eine vorgegebene Anzahl Umin ist, so fülle das gesamte Rechteck mit der Kennung U",
c5) "wenn die Form des in c1 erwähnten Rechtecks die Bedingungen erfüllt: Breite/Höhe > min und Breite/Höhe < max, so fülle das gesamte Rechteck mit der Kennung U",
wobei min und max vorgegebene Zahlen sind.

5. System nach Anspruch 3 oder 4, bei dem die vorgegebenen Felder (A'), auf die die Kontextregeln (a) und (b) angewandt werden, eine Größe von 3 x 3-Teilbildern haben.

6. System nach Anspruch 3, 4 oder 5, bei dem die Glättungsmittel mehrere Stufen (34) zum schrittweisen Modifizieren der anfänglichen Kennungsmatix durch wenigstens einmaliges Anwenden jeder Kontextregel gemäß einer vorgegebenen Reihenfolge aufweisen.

7. System nach Anspruch 6, bei dem die Kontextregel mit der Struktur (a) vor der Kontextregel mit der Struktur (b) und die Kontextregel mit der Struktur (b) vor der Kontextregel mit der Struktur (c) angewandt wird.

8. System nach Anspruch 6 oder 7, bei dem die Kontextregeln eine lokale Regel enthalten, die verlangt, daß
"wenn ein gegebenes Matrixelement von oberen, unteren rechten und linken unmittelbaren Nachbarn umgeben ist, die alle die gleiche Kennung X haben, so wird die Kennung des gegebenen Matrixelements ebenfalls in X geändert",
wobei die lokale Regel unmittelbar vor jeder der Regeln mit der Struktur (a), (b) oder (c) angewandt wird.

9. System nach einem der vorstehenden Ansprüche, bei dem die Größe jedes Teilbildes wenigstens 16 x 16 Pixel vorzugsweise 64 x 64 Pixel beträgt und die Scan-Auflösung größer als 100 dpi ist.

10. System nach Anspruch 9, bei dem die Kennzeichnungsmittel (10) eine Histogrammeinheit (24) zum Erzeugen von Grauwerthistogrammen jedes Teilbildes enthalten.

11. System nach einem der vorstehenden Ansprüche, bei dem die Kennzeichnungsmittel (10) einen Baum-Klassifizierer zum Bestimmen der einem gegebenen Teilbild zuzuordnenden Nennung durch Überprüfung von Merkmalen der eingegebenen Daten gemäß einer Baumstruktur umfassen.

12. System nach einem der vorstehenden Ansprüche, bei dem die Kennzeichnungsmittel eine Einrichtung (38) zum Erkennen von Rastern oder geditherter Information enthalten.

13. System nach einem der Ansprüche 1 bis 11, mit Kontextregeln zum Auffinden von Halbtonbereichen.

14. System nach einem der Ansprüche 1 bis 11, mit einer Einrichtung (38) zum Erfassen von Rastern oder geditherter Information nur in Fotografiebereichen, die durch die Glättungsmittel (12) segmentiert worden sind.

15. System nach einem der vorstehenden Ansprüche, mit mehreren Kennzeichnungsmitteln (10) zur Parallelverarbeitung der Daten von mehreren Teilbildern.

16. System nach einem der vorstehenden Ansprüche, mit Randlinienanalysemitteln (40), die auf die Ausgabewerte der Glättungsmittel (12) ansprechen, um die Ränder der segmentierten Bereiche mit einer größeren Auflösung zu lokalisieren.

17. Verfahren zum automatischen Segmentieren eines gescannten Dokuments in einem elektronischen Dokumentenverarbeitungsgerät, um Dokumentenbereiche (T, P) zu trennen, die verschiedene Arten von Bildinformation enthalten, wie etwa Schwarz/Weiß-Bilder, Bilder mit kontinuierlicher Tönung und dergleichen, wobei
- das das gesamte Dokument repräsentierende gescannte Bild in eine Matrix aus Teilbildern aufgeteilt wird,
- die in jedem Teilbild enthaltene Information analysiert wird, um dem Teilbild eine anfängliche Kennung (BW, BIM, BG, U) zuzuordnen, um so eine anfängliche Kennungsmatrix zu erhalten, und
- die anfängliche Kennungsmatrix geglättet wird, indem die Kennungen einzelner Matrixelemente gemäß Kontextregeln geändert werden, um ein Muster aus gleichförmig gekennzeichneten Segmenten entsprechend den verschiedenen Dokumentenbereichen zu erhalten, dadurch **gekennzeichnet,** daß die anfänglichen Kennungen aus einer ersten Menge von Kennungen (BW, BIM, BG, U) ausgewählt werden und daß in dem Glättungsschritt die anfänglichen Kennungen in geglättete Kennungen (T, P) umgewandelt werden, die aus einer zweiten Menge von Kennungen ausgewählt sind, die zahlenmäßig kleiner ist als die erste Menge.

## Revendications

1. Système pour segmentation automatique d'un document exploré dans un dispositif électronique de traitement de documents, en vue de séparer des zones de document (T, P) contenant des informations d'image de types différents, telles que représentations en blanc et noir, représentations en ton continu et analogues, comprenant :
- un moyen de production de matrice servant à diviser l'image explorée, représentant la totalité du document, en une matrice de sous-images,
- un moyen d'affectation de labels (10) servant à analyser l'information contenue dans chaque sous-image et à affecter à cette sous-image un label initial (BW, BIM, BG, U), de façon à obtenir une matrice de labels initiaux (figure 4(A)) et
- un moyen de relaxation (12) servant à assurer une relaxation de la matrice de labels initiaux en modifiant les labels conformément à des règles de contexte, de façon à obtenir un motif de segments présentant une affectation uniforme de label et représentant les différentes zones du document,
caractérisé en ce que le moyen d'affectation de labels (10) est agencé de façon à choisir les labels initiaux à partir d'un premier groupe de labels (BW, BIM, BG, U) et en ce que le moyen de relaxation est agencé de façon à transformer les labels initiaux en labels relaxés (T, P), ces labels relaxés étant choisis à partir d'un second groupe de labels dont le nombre est inférieur à celui du premier groupe.

2. Système suivant la revendication 1, dans lequel les règles de contexte mises en oeuvre dans le moyen de relaxation (12) comprennent des règles servant à étendre certains des labels initiaux (BW, U) et à en éliminer d'autres (BIM, BG), les labels étendus étant finalement identifiés aux labels relaxés (T, P).

3. Système suivant la revendication 2, dans lequel les règles de contexte comprennent au moins une règle qui a l'une des structures qui suit :
a) "si, dans un ensemble prédéterminé (A') d'éléments de matrice faisant partie de la matrice de labels initiaux, au moins n éléments présentent le label BW et si cet ensemble ne contient pas de labels du groupe G, changer alors tous les labels de cet ensemble en BW";
dans laquelle n est un nombre prédéterminé, BW est un label initial prédéterminé et G est un sous-groupe prédéterminé du groupe de labels initiaux,
b) "si, dans un ensemble prédéterminé (A') d'éléments de matrice faisant partie de la matrice de labels initiaux, au moins m éléments présentent le label U, changer alors tous les labels de cet ensemble en U" ;
dans laquelle m est un nombre prédéterminé et U est un label initial prédéterminé,
c)
"c1) dans le cas où le label U forme des séquences verticales et horizontales (14, 16) se coupant, remplir du label U la totalité du rectangle (18) sous-tendu par ces séquences ;
c2) contrôler toutes les combinaisons de séquences horizontales et verticales de façon à rendre maximale la zone à remplir du label U;
c3) si la hauteur de la zone maximale est inférieure à hₘᵢₙ éléments ou si la largeur est inférieure à wₘᵢₙ éléments, changer alors en BW tous les labels situés dans cette zone" ;
dans laquelle U et BW sont des labels initiaux prédéterminés et hₘᵢₙ et Wₘᵢₙ sont des nombres prédéterminés.

4. Système suivant la revendication 3, caractérisé en ce que les règles de contexte comprennent en outre une règle ayant la structure qui suit :
c4) "si le rectangle mentionné dans c1) contient un nombre de labels U supérieur à un nombre prédéterminé Umin, remplir du label U la totalité du rectangle",
c5) "si la forme du rectangle mentionné dans c1) remplit les conditions : largeur/hauteur >min. et largeur/hauteur <max., remplir du label U la totalité du rectangle",
dans laquelle min. et max. sont des nombres prédéterminés.

5. Système suivant la revendication 3 ou 4, dans lequel les ensembles prédéterminés (A') auxquels les règles de contexte (a) et (b) sont appliquées ont une taille de 3 x 3 sous-images.

6. Système suivant l'une des revendications 3 à 5, dans lequel les moyens de relaxation comprennent plusieurs étages (34) servant à modifier pas à pas la matrice de labels initiaux en appliquant chaque règle de contexte au moins une fois conformément à un ordre séquentiel prédéterminé.

7. Système suivant la revendication 6, dans lequel la règle de contexte ayant la structure (a) est appliquée avant la règle de contexte ayant la structure (b) et la règle de contexte ayant la structure (b) est appliquée avant la règle de contexte ayant la structure (c).

8. Système suivant l'une des revendications 6 et 7, dans lequel les règles de contexte comprennent une règle locale prescrivant que :
"si un élément donné de matrice est entouré par des voisins supérieur, inférieur, droit et gauche immédiats qui présentent tous le même label X, le label de l'élément donné de matrice est aussi changé en X",
cette règle locale étant appliquée immédiatement avant chacune des règles ayant la structure (a), (b) ou (c).

9. Système suivant l'une quelconque des revendications précédentes, dans lequel la taille de chaque sous-image est d'au moins 16 x 16 pixels, de préférence de 64 x 64 pixels et la résolution d'exploration est supérieure à 100 points par pouce.

10. Système suivant la revendication 9, dans lequel le moyen d'affectation de labels (10) comprend une unité d'histogramme (24) servant à produire des histogrammes de valeurs de gris de chaque sous-image.

11. Système suivant l'une quelconque des revendications précédentes, dans lequel le moyen d'affectation de labels (10) comprend un système de classement arborescent servant à déterminer le label à affecter à une sous-image donnée en contrôlant des particularités des données d'entrée conformément à une structure arborescente.

12. Système suivant l'une quelconque des revendications précédentes, dans lequel le moyen d'affectation de labels comprend des moyens (38) servant à détecter des trames ou une information tremblée.

13. Système suivant l'une quelconque des revendications 1 à 11, comprenant des règles de contexte servant à déterminer des zones en demi-teinte.

14. Système suivant l'une quelconque des revendications 1 à 11, comprenant des moyens (38) servant à ne détecter des trames ou une information tremblée que dans des zones photographiques qui ont été segmentées par les moyens de relaxation (12).

15. Système suivant l'une quelconque des revendications précédentes, comprenant plusieurs moyens d'affectation de labels (10) servant à traiter en parallèle les données provenant de plusieurs sous-images.

16. Système suivant l'une quelconque des revendications précédentes, comprenant un moyen d'analyse de limite (40) réagissant à la sortie du moyen de relaxation (12) de façon à localiser les limites des zones segmentées avec une résolution plus élevée.

17. Procédé de segmentation automatique d'un document exploré dans un dispositif électronique de traitement de documents, en vue de séparer des zones de document (T, P) contenant différents types d'information d'image, tels que représentations en blanc et noir, représentations en ton continu et analogues, selon lequel :
- l'image explorée représentant la totalité du document est divisée en une matrice de sous-images,
- l'information contenue dans chaque sous-image est analysée de façon à affecter à cette sous-image un label initial (BW, BIM, BG,U), de façon à obtenir une matrice de labels initiaux, et
- la matrice de labels initiaux est soumise à une relaxation par changement des labels de différents éléments de matrice conformément à des règles de contexte, de façon à obtenir un motif de segments à affectation uniforme de labels et représentant les différentes zones du document,
caractérisé en ce que les labels initiaux sont choisis dans un premier groupe de labels (BW, BIM, BG,U) et en ce que, dans l'opération de relaxation, les labels initiaux sont transformés en labels relaxés (T, P) qui sont choisis dans un second groupe de labels dont le nombre est inférieur à celui du premier groupe.
